# EUROPÄISCHE PATENTSCHRIFT

(11) **EP 4 642 212 B1**
(45) Veröffentlichungstag und Bekanntmachung des Hinweises auf die Patenterteilung: **05.08.2026**
(21) Anmeldenummer: 25717156.1
(22) Anmeldetag: 14.03.2025
(51) Int. Cl.: A01B 39/08, A01B 39/16, A01B 39/18

(54) **BEARBEITUNGSGERÄT UND VERFAHREN ZUM BETREIBEN EINES BEARBEITUNGSGERÄTES**
CULTIVATING IMPLEMENT AND METHOD FOR OPERATING A CULTIVATING IMPLEMENT
OUTIL DE CULTURE ET PROCÉDÉ DE FONCTIONNEMENT D'UN OUTIL DE CULTURE

(30) Priorität: 14.03.2024 DE 102024107368
(43) Veröffentlichungstag der Anmeldung: 05.11.2025
(73) Patentinhaber: Clemens GmbH & Co. KG, 54516 Wittlich (DE)
(72) Erfinder: CLEMENS, Patrick, 54484 Maring - Noviand (DE); FUNK, Markus, 54597 Roth bei Prüm (DE); STEFFES, Tobias, 54533 Gipperath (DE)
(74) Vertreter: Kutsch, Bernd
(86) Internationale Anmeldenummer: PCT/DE2025/150002
(87) Internationale Veröffentlichungsnummer: WO 2025/190461

(56) Entgegenhaltungen:
- EP-A1- 0 399 137
- WO-A1-2022/269375
- DE-A1- 102020 002 718
- DE-B4- 102009 047 181
- DE-U1- 202019 001 301

## Beschreibung

Die vorliegende Erfindung betrifft ein Bearbeitungsgerät, insbesondere für den Einsatz im Wein- oder Obstanbau, bei dem der Bodenbereich oder der Zwischenraum zwischen den Pflanzen oder Rebstöcken einer Pflanzenreihe bearbeitet werden soll, ohne die Nutzpflanzen zu beschädigen, und ein Verfahren zum Betrieb eines solchen Bearbeitungsgerätes. Das Bearbeitungsgerät ist bevorzugt zur Befestigung, insbesondere zur seitlichen Befestigung an einem Fahrzeug wie einem Traktor oder einer Zugmaschine vorgesehen.

### Stand der Technik

EP 0 399 137 A1 beschreibt ein Bodenbearbeitungsgerät, das seitlich an einem Traktor oder einer ähnlichen Zugmaschine befestigt wird. Das Arbeitswerkzeug ist eine Flachschar, die einige Zentimeter unterhalb des Bodens durch das Erdreich geführt wird, um unerwünschte Pflanzen zu unterschneiden und damit zum Absterben zu bringen. Das Bodenbearbeitungsgerät kommt insbesondere im Wein- oder Obstanbau zur Anwendung, um die Zwischenräume zwischen den Nutzpflanzen in einer Pflanzenreihe bearbeiten. Für eine effektive und maschinisierte Bearbeitung der Zwischenräume ist es wünschenswert, dass das Arbeitswerkzeug nicht in Berührung mit den Nutzpflanzen bzw. den zur Erziehung der Pflanzen notwendigen Strukturen kommt. Aus diesem Grund kann das Arbeitswerkzeug bei Betrieb um eine im Wesentlichen in lotrechter Richtung verlaufende Drehachse von der Arbeitsposition in eine Ruheposition verschwenkt werden.

DE 40 40 843 A1 beschreibt ein Bodenbearbeitungsgerät, das sowohl rechts als auch links an einem landwirtschaftlichen Fahrzeug befestigt und eingesetzt werden kann.

Aus DE 101 23 011 C1 ist ein Bodenbearbeitungsgerät zur Befestigung an einem Fahrzeug insbesondere für den Einsatz im Wein- oder Obstanbau bekannt, mit dem der Bodenbereich zwischen den Pflanzen oder Rebstöcken einer Pflanzenreihe bearbeitet werden kann, ohne die Nutzpflanzen zu beschädigen.

In DE 91 14 640 U1 wird eine Konstruktion eines solchen Bodenbearbeitungsgerätes vorgeschlagen, bei der die Erfassung von Hindernissen durch einen mechanischen Taster erfolgt. Der mechanische Taster besteht beispielsweise aus einem dünnen Metallstab, der parallel zu und räumlich, in Fahrtrichtung gedacht, vor dem Arbeitswerkzeug angeordnet ist. Der Metallstab ist verschwenkbar eingerichtet. Wenn der Metallstab während der Fahrt auf ein Hindernis wie beispielsweise auf einen Rebstock stößt, wird der Metallstab nach hinten eingeschwenkt. Bei dieser Bewegung des Metallstabs aus seiner Ruhelage heraus wird über eine mechanische Betätigung ein Magnetventil einer Steuervorrichtung ausgelöst, wodurch der Hydraulikdruck, der das Arbeitswerkzeugs in seiner Arbeitsposition hält, abgeschaltet wird und die Flachschar aufgrund des während der Fahrt anstehenden Bodendrucks automatisch in ihre Ruheposition parallel zur Längsachtung des Fahrzeugs bewegt wird. Der Metallstab ist mit einer Rückstellfeder ausgestattet, welche den Metallstab in seine Ruhelage zurückführt, sobald das Hindernis überwunden ist.

Bei dieser Ausführungsform ist es schwierig, den Metallstab derart einzustellen, dass beispielsweise Unkraut keine Auslenkung des Arbeitswerkzeugs hervorruft, jedoch gleichzeitig die Empfindlichkeit ausreichend ist, um die Beschädigung von beispielsweise dünneren Rebstöcken zu vermeiden. Da die Vermeidung der Beschädigung der Nutzpflanzen Vorrang hat, führt dies in der Praxis dazu, dass die Bodenbereiche zwischen den Nutzpflanzen nur unzureichend bearbeitet werden, da das Arbeitswerkzeug zu häufig ohne zutreffenden Grund in seine Ruheposition parallel zur Längsachtung des Fahrzeugs verschwenkt wird.

DE 10 2009 047 181 A1 beschreibt ein Bodenbearbeitungsgerät zur Befestigung an einem Fahrzeug, beispielsweise einem Traktor, welches ein dreh- oder schwenkbar gelagertes Arbeitswerkzeug umfasst, das von einer Arbeitsposition in eine Ruheposition verschwenkbar ist, sowie ein mechanisches Tastwerkzeug zur Erfassung von Hindernissen. Das Arbeitswerkzeug kann beispielsweise ein Schneidmesser sein, um etwa Unkraut oder Gräser im Bereich zwischen den Nutzpflanzen, wie etwa Weinreben oder Obstbäumen, zu unterschneiden bzw. abzuschneiden. Das Tastwerkzeug ist bewegbar eingerichtet, um bei einem Kontakt mit einem Hindernis von diesem in eine Ruhelage ausgelenkt zu werden. Im Einsatz ist das Bodenbearbeitungsgerät beispielsweise an der Seite oder dem Heck eines Traktors eingerichtet und das Arbeitswerkzeug steht in seiner Arbeitsposition rechtwinklig vom Fahrzeug ab, das heißt rechtwinklig zur Fahrtrichtung des Fahrzeugs. Das Tastwerkzeug ist dann räumlich in der Fahrtrichtung vor dem Arbeitswerkzeug angeordnet. Das Bodenbearbeitungsgerät umfasst weiter Mittel, um das Arbeitswerkzeug proportional abhängig von der Bewegung des Tastwerkzeugs zu verschiedenen Arbeitspositionen zu verschwenken. Das Arbeitswerkzeug kann somit nicht nur zwischen einer Arbeitsposition und einer Ruheposition verschwenkt werden, sondern es kann in eine Vielzahl von unterschiedlichen Arbeitspositionen gebracht werden. Das Bodenbearbeitungsgerät umfasst auch eine Steuereinheit, die abhängig von der Bewegung des Tastwerkzeugs eine proportionale Verschwenkung des Arbeitswerkzeugs in eine andere Arbeitsposition bewirkt.

Ausgehend von diesem Stand der Technik stellt sich die Aufgabe, ein Bearbeitungsgerät zur Befestigung an einem Fahrzeug zu schaffen, das die oben genannten Nachteile des Standes der Technik ausräumt bzw. vermindert. Insbesondere stellt sich die Aufgabe, ein Gerät bereitzustellen, das eine gleichmäßigere und vollständigere Bearbeitung der Zwischenräume zwischen Nutzpflanzen bzw. den notwendigen Hilfs- und Stützstrukturen insbesondere im Wein- oder Obstanbau ermöglicht und das vorzugsweise auch eine einfache Anpassung der Bearbeitung an Pflanzenart und -stärke, Fahrgeschwindigkeit, Bodenbeschaffenheit, Bodenbewuchs usw. erlaubt.

### Zusammenfassung der Erfindung

Die Erfindung betrifft ein Bearbeitungsgerät gemäß Anspruch 1, einen Traktor oder Zugmaschine gemäß Anspruch 9 und ein Verfahren zum Betreiben eines Bearbeitungsgerätes gemäß Anspruch 10.

Die jeweiligen Unteransprüche betreffen vorteilhafte Weiterbildungen der Erfindung.

Das erfindungsgemäße Bearbeitungsgerät ist vorzugsweise zur Befestigung an einem Fahrzeug wie einem Traktor oder einer Zugmaschine insbesondere zur Bodenbearbeitung zwischen Pflanzen von Reihenkulturen wie Wein-, Obst- oder Hopfenkulturen oder Hecken vorgesehen. Es umfasst ein bewegbares, insbesondere drehbar gelagertes Arbeitswerkzeug, das von einer Arbeitsposition, in der das Arbeitswerkzeug einen Arbeitsbereich zu bearbeiten bestimmt ist, in eine Ruheposition bewegbar, insbesondere verschwenkbar ist, in welcher Ruheposition das Arbeitswerkzeug zumindest weitgehend wirkungslos nachläuft. Das Bearbeitungsgerät umfasst ferner eine Detektionsvorrichtung zur Erfassung von Hindernissen in dem Arbeitsbereich. Die Hindernisse sind beispielsweise Reben oder Weinbergspfähle und erfordern ein Bewegen oder Verschwenken des Arbeitswerkzeuges aus der Arbeitsposition in die Ruheposition. Es wird ein Ausweichen des Arbeitswerkzeugs gegenüber dem Hindernis in dem Arbeitsbereich bewirkt. Das Bearbeitungsgerät umfasst außerdem eine Bewegungsvorrichtung zur Bewegung des Arbeitswerkzeuges aus der Ruheposition zurück in die Arbeitsposition. Weiter ist eine Einstellvorrichtung zur Einstellung oder Veränderung der Arbeitsstellung der Bewegungsvorrichtung vorgesehen. Die Einstellvorrichtung weist dazu eine justierende, insbesondere selbstjustierende Energiespeichereinrichtung auf, beispielsweise eine mechanische Feder, einen Kondensator oder eine Schwungmasse.

Das Arbeitswerkzeug ist vorzugsweise eine Schar, ein Schneidmesser, eine Bodenfräse oder ein anderes Gerät zur Boden- und/oder Pflanzenbearbeitung. Die Detektionsvorrichtung ist vorzugsweise ein Sensorelement zur mechanischen oder optischen Detektion des Hindernisses. Die Detektionsvorrichtung kann dazu eine Kamera mit zugeordneter Bildverarbeitungsvorrichtung umfassen. Die Detektionsvorrichtung ist räumlich in der Fahrtrichtung vor dem Arbeitswerkzeug angeordnet. Zumindest befindet sich ihr Detektionsbereich in Fahrtrichtung vor dem Arbeitswerkzeug, sodass sie nicht zwangsweise selbst räumlich in der Fahrtrichtung vor dem Arbeitswerkzeug angeordnet sein muss, und auch nicht ihr vollständiger Körper.

In einer bevorzugten Ausführungsform der Erfindung ist die Detektionsvorrichtung ein bewegbarer Taststab oder ein anderes bewegbar eingerichtetes Tastwerkzeug, der bzw. das dazu vorgesehen ist, bei Kontakt mit einem Hindernis von diesem ausgelenkt zu werden.

In einer bevorzugten Ausführungsform der Erfindung ist oder umfasst die Bewegungsvorrichtung, allgemein als eine Energiespeichereinrichtung bezeichnet, eine Feder, insbesondere eine Stahlfeder oder eine Luftfeder, mit der das Arbeitswerkzeug aus der Ruhe- oder Ausweichposition in die Arbeitsposition zurückbewegbar ist und mit der auf das Arbeitswerkzeug in der Arbeitsposition eine Kraft oder ein Drehmoment ausübbar ist.

In einer bevorzugten Ausführungsform der Erfindung übt die Bewegungsvorrichtung auf das Arbeitswerkzeug in der Arbeitsposition zumindest zeitweilig ein Drehmoment aus und wirkt zumindest zeitweilig einem auf das Arbeitswerkzeug bei Betrieb einwirkenden Drehmoment entgegen, sodass das Arbeitswerkzeug in einer vorderen Anschlagsposition, in der Nähe einer vorderen Anschlagsposition oder allgemein in einer in Fahrtrichtung vorderen Arbeitsposition gehalten wird.

Die Einstellvorrichtung ist oder umfasst vorzugsweise einen Aktor, einen Motor wie einen Elektromotor oder einen Kompressor. Bevorzugt verstellt ein Aktor die Vorspannung einer Feder.

In einer bevorzugten Ausführungsform der Erfindung wird mit der Einstellvorrichtung eine Vorspannung der Bewegungsvorrichtung, insbesondere Energiespeichereinrichtung, besonders bevorzugt der Feder, eingestellt oder geregelt und damit kontinuierlich oder von Zeit zu Zeit eine Veränderung des Arbeitspunktes der Bewegungsvorrichtung vorgenommen.

In einer bevorzugten Ausführungsform der Erfindung ist oder umfasst die Bewegungsvorrichtung einen Motor, insbesondere einen Elektromotor, mit zugeordneten Mitteln wie einer Riemenoder Kettenantriebsvorrichtung, einem Hydraulikzylinder oder einem Pneumatikzylinder zur Bewegung oder zum Verschwenken des Arbeitswerkzeuges von der Arbeitsposition die in eine Ruheoder Ausweichposition. Der Motor, die zugeordneten Mittel, die Bewegungsvorrichtung und die Einstellvorrichtung wirken dabei vorzugsweise zusammen.

Das erfindungsgemäße Bearbeitungsgerät ist besonders zur Bearbeitung des Zwischenraumes oder des Bodenzwischenraumes zwischen Pflanzen von Reihenkulturen wie Wein-, Obst- oder Hopfenkulturen oder Hecken vorgesehen bzw. geeignet.

In einer bevorzugten Ausführungsform der Erfindung weist das Bearbeitungsgerät ein Mittel auf, mit dem ein Vergleich einer Auslenkung des Arbeitswerkzeuges in der Arbeitsposition und einer Auslenkung der Detektionsvorrichtung vorgenommen werden kann. Bevorzugt wird ein Referenzweg von Tasterstab zu Schar beobachtet bzw. gemessen. Weiter ist vorgesehen, dass mit der Einstellvorrichtung die Arbeitsstellung der Bewegungsvorrichtung in Abhängigkeit von dem Ergebnis dieses Vergleichs verändert werden kann.

In einer bevorzugten Ausführungsform der Erfindung ist mit der Einstellvorrichtung eine Veränderung der Arbeitsstellung der Bewegungsvorrichtung, insbesondere die in der Energiespeichereinrichtung temporär eingespeicherte Energiemenge, besonders bevorzugt die Vorspannung der Feder, in Abhängigkeit von einem Ergebnis eines Vergleiches einer Auslenkung des Arbeitswerkzeuges bei Betrieb in der Arbeitsposition und einer Auslenkung der Detektionsvorrichtung bei Betrieb steuer- oder regelbar.

In einer bevorzugten Ausführungsform der Erfindung ist ein Mittel vorgesehen, mit dem ein Vergleich einer Auslenkempfindlichkeit des Arbeitswerkzeuges in der Arbeitsposition und einer Detektionsempfindlichkeit der Detektionsvorrichtung bei Betrieb vorgenommen werden kann. Weiter ist dabei dann vorgesehen, dass mit der Einstellvorrichtung der Arbeitspunkt der Bewegungsvorrichtung in Abhängigkeit von dem Ergebnis dieses Vergleichs verändert werden kann.

In einer bevorzugten Ausführungsform der Erfindung steuert oder regelt die Einstellvorrichtung den Arbeitspunkt der Bewegungsvorrichtung, insbesondere die Vorspannung der Feder, in Abhängigkeit von der Auslenkempfindlichkeit des Arbeitswerkzeuges bei Betrieb und der Detektionsempfindlichkeit der Detektionsvorrichtung bei Betrieb.

In einer bevorzugten Ausführungsform der Erfindung ist vorgesehen, dass die Einstellvorrichtung den Arbeitspunkt der Bewegungsvorrichtung, insbesondere die Vorspannung der Feder, in Abhängigkeit von der Amplitude einer bei Betrieb auf das Arbeitswerkzeug einwirkenden, zeitlich veränderlichen Kraft oder von der Amplitude eines bei Betrieb auf das Arbeitswerkzeug einwirkenden, zeitlich veränderlichen Drehmoments und weiter in Abhängigkeit von der Amplitude eines bei Betrieb auftretenden, zeitlich veränderlichen Signals der Detektionsvorrichtung verändert, insbesondere regelt.

In einer bevorzugten Ausführungsform der Erfindung wird das beschriebene Bearbeitungsgerät seitlich an einem Traktor oder einer Zugmaschine befestigt.

Das erfindungsgemäße Verfahren zum Betreiben eines Bearbeitungsgerätes, das an einem Fahrzeug befestigt ist oder zur Befestigung an einem Fahrzeug vorgesehen ist, umfasst die Schritte: Bereitstellen eines bewegbaren, insbesondere drehbar gelagerten Arbeitswerkzeuges, das von einer Arbeitsposition, in der das Arbeitswerkzeug einen Arbeitsbereich bearbeiten kann, in eine Ruhe- oder Ausweichposition bewegbar, insbesondere verschwenkbar ist; Bereitstellen einer Detektionsvorrichtung zur Erfassung von Hindernissen in dem Arbeitsbereich, die ein Bewegen oder Verschwenken des Arbeitswerkzeuges aus der Arbeitsposition in eine Ruhe- oder Ausweichposition erforderlich oder ratsam machen, um so ein Ausweichen des Arbeitswerkzeuges gegenüber dem Hindernis in dem Arbeitsbereich zu bewirken; und Bereitstellen einer Bewegungsvorrichtung zur Bewegung des Arbeitswerkzeuges aus der Ruhe- oder Ausweichposition in die Arbeitsposition. Bei Betrieb des Bearbeitungsgerätes wird mittels einer Einstellvorrichtung eine Einstellung oder Veränderung der Arbeitsstellung der Bewegungsvorrichtung, besonders bevorzugt in Abhängigkeit einer Lastschwankungsamplitude, vorgenommen.

Die Amplitude einer detektierten Werkzeugbewegung des Bearbeitungsgeräts oder mehrerer Bewegungen von Teilen des Bearbeitungsgeräts regelt eine Energiespeichereinrichtung, insbesondere eine mechanische Feder als Einstellvorrichtung für die Bewegungsvorrichtung. Die Erfassung eines Lastzustandes führt mithin zur Ansteuerung. Die Erfassung ist, den Bedienkomfort und die Bearbeitungsqualitätskontrolle bereichernd, zusätzlich nutzbar für Aussagen über den Bodenwiderstand, das aktuelle Verhältnis zur Arbeitsgeschwindigkeit und -tiefe. Es lassen sich Lastwarnungen an die Zugmaschine wegen eines zu hohen Bodenwiderstandes generieren, die beispielsweise zur automatischen Geschwindigkeitsdrosselung führen.

Das Bearbeitungsgerät wird bei diesem Verfahren vorzugsweise zur Bearbeitung des Zwischenraumes oder des Bodenzwischenraumes zwischen Pflanzen von Reihenkulturen wie Wein-, Obst- oder Hopfenkulturen oder Hecken eingesetzt.

### Zeichnungen

Der Erfindung wird anhand der Zeichnungen und der nachfolgenden Beschreibung näher erläutert.

Die Figur 1 zeigt eine perspektivische Ansicht eines erfindungsgemäßen Bearbeitungsgerätes.

Die Figur 2 zeigt ein Diagramm zu einer aktiven Einstellung der Arbeitsstellung der Bewegungseinrichtung bei Betrieb, mit eingetragenen Zuständen Z1 bis Z4, wie apparativ in den Figuren 4 bis 7 dargestellt,
mit einem
ersten eingetragenen Verlauf 100 für die Federspannung, bzw. einer in einer Energiespeichereinrichtung gespeicherten Energie über der durch das Bearbeitungsgerät zurückgelegten Strecke über den bzw. in dem zu bearbeitenden Boden, einem zweiten eingetragenen Verlauf 200 für die Auslenkung der Schar in ° gemäß sekundärer Y-Achse, einem dritten eingetragenen Verlauf 300 für die Auslenkung des als Taster vorgesehenen Metallstabes zur Sensorposition in ° auch der primären Y-Achse und
einem vierten Verlauf 400 für eine dem Werkzeug zugeführte Energie, wobei die Zugleistung des Fahrzeugs nicht berücksichtigt ist.

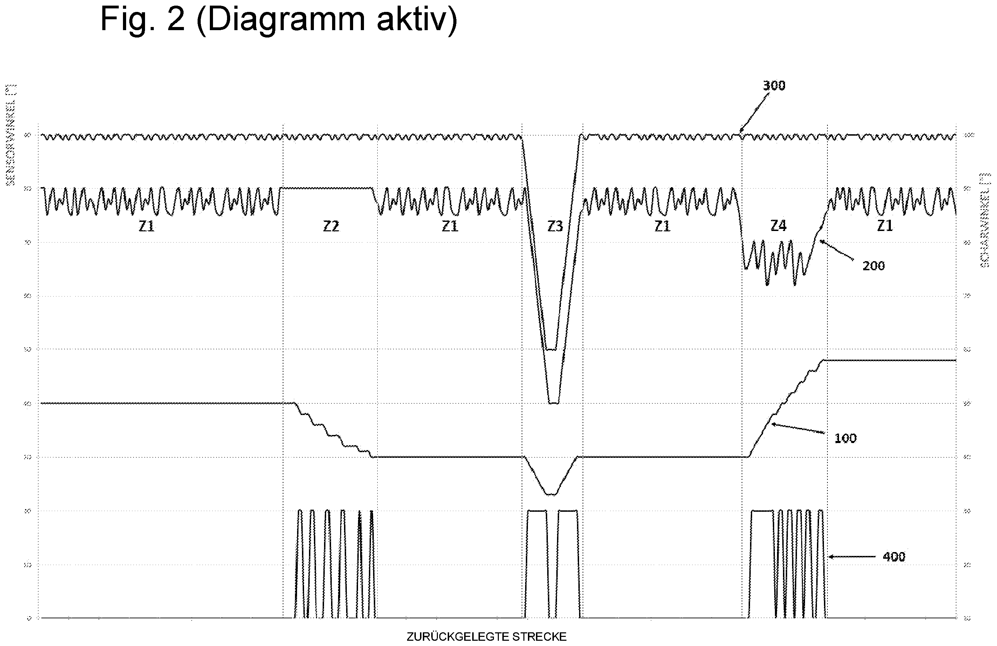

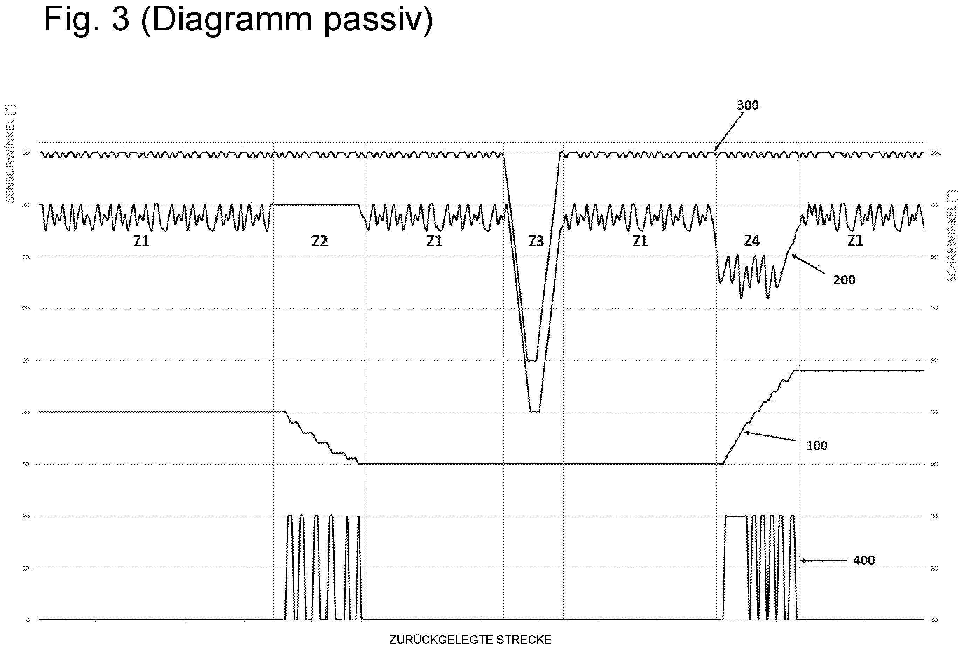

Die Figur 3 zeigt ein Diagramm zu einer passiven Einstellung in Analogie zur Figur 2.

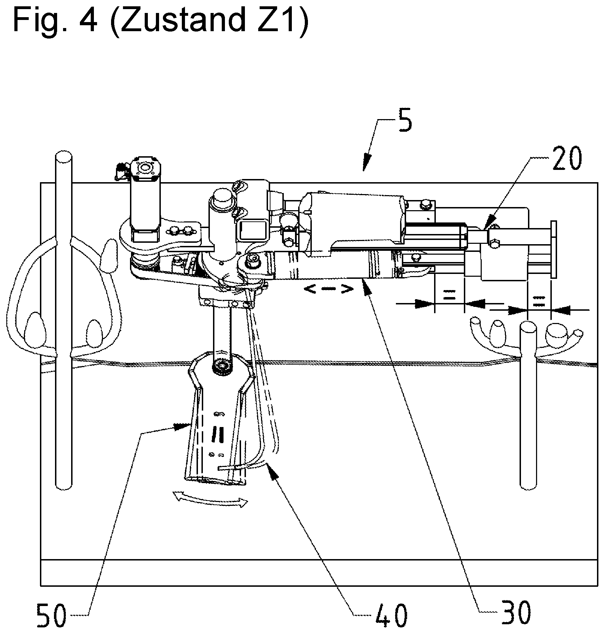

Die Figur 4 (Zustand Z1) zeigt das Bearbeitungsgerät in einem Sollzustand (Kräftegleichgewicht, erleichtertes Schwingen, Werkzeug bezieht keine Energie, wird lediglich durch das Fahrzeug gezogen.

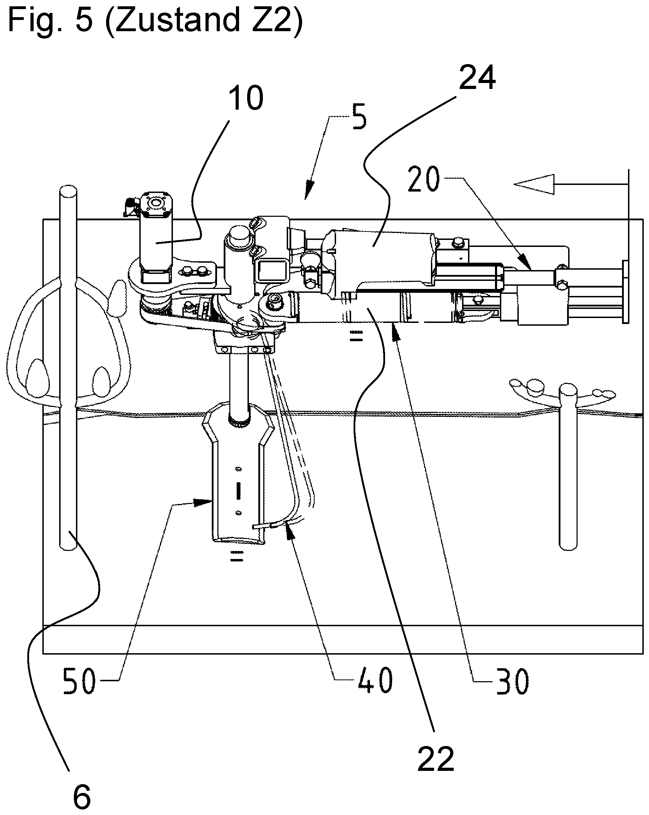

Die Figur 5 (Zustand Z2) zeigt das Bearbeitungsgerät während die Momentendifferenz, welche die Feder 22 bewirkt, reduziert wird. Sie war zu stark gespannt. Das Werkzeug benötigt Energie, um die Feder 22 zu entspannen. Die Energie wird sequenziell zugeführt, bis die Schar sich vom Anschlag zu lösen beginnt und der Sollzustand Z1 als eine Art Schwebezustand wieder erreicht ist.

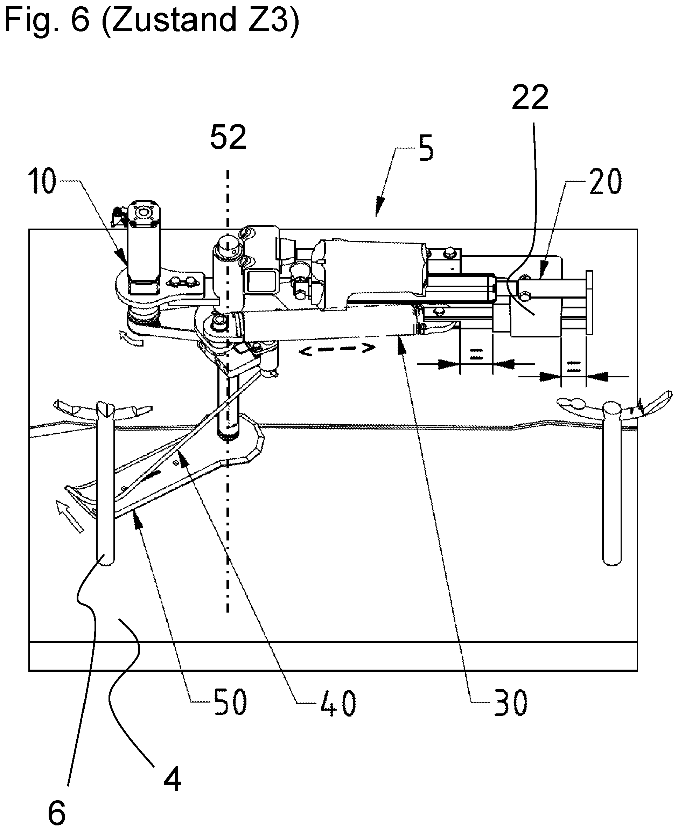

Die Figur 6 (Zustand Z3) zeigt die Situation, in der das Werkzeug einem Hindernis 6 auszuweichen hat. Der Taster 300, 40 wird im Fall der passiven Variante ausgelenkt. Mittels Taster- und/oder Schargegendruck wird die Schar als Arbeitswerkzeug 50 zurück in die Arbeitsposition geschwenkt, wenn das Arbeitswerkzeug 50 am Hindernis 6 vorbei gelangt ist. Sie kehrt durch die vorhandene Vorspannung der Feder als Energiespeichereinrichtung 22 zurück in Arbeitsposition. In der aktiven Variante wird die Feder entspannt und das Stellglied 10 schwenkt die Schar aktiv ein. Zusätzlich wird das Arbeitswerkzeug 50 durch Taster- und/oder Schargegendruck ausgelenkt, sobald das Arbeitswerkzeug 50 am Hindernis 6 vorbei gelangt ist. Die Feder wird als Energiespeichereinrichtung 22 gespannt und, gemäß der hier dargestellten vorteilhaften Ausführungsform zusätzlich unterstützt mittels des Stellgliedes 10, schwenkt die Schar 50 aktiv aus in ihre Arbeitswerkzeug-Arbeitsposition.

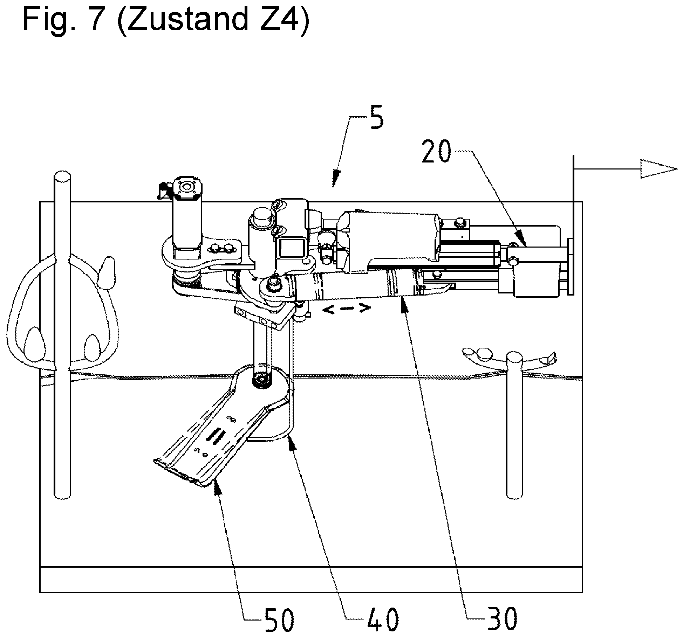

Die Figur 7 (Zustand Z4) zeigt eine Reaktion des nach einem vorteilhaften erfindungsgemäßen Verfahren betriebenen Bearbeitungsgeräts 5 auf eine Fahrsituation mit zu schwach gespannter Energiespeichereinrichtung 22. Nun erkennt man bei Betrachtung der Figuren 2 und 3 und dem jeweiligen Verlauf 400, dass Energie benötigt wird, um die Feder als Energiespeichereinrichtung 22 zu spannen. Die durch die Feder bewirkte Momentendifferenz 100 steigt währenddessen und die Schar rückt wieder näher in Richtung Anschlag. So gelangt das ggf. nun schneller fortbewegte Bearbeitungsgerät 5 wieder in den Sollzustand Z1.

### Beschreibung von bevorzugten Ausführungsformen der Erfindung

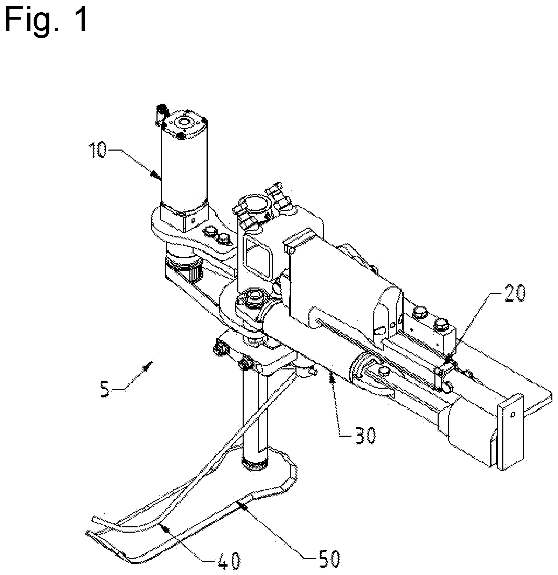

Die Figur 1 zeigt eine perspektivische Ansicht einer bevorzugten Ausführungsform eines erfindungsgemäßen Bearbeitungsgerätes 5, das zur seitlichen Montage an einem Zugfahrzeug bzw. einem Traktor vorgesehen ist. Das Bearbeitungsgerät 5 ist zur Bearbeitung des Zwischenraumes oder des Bodenzwischenraumes zwischen Pflanzen von Reihenkulturen wie Wein-, Obst- oder Hopfenkulturen oder Hecken ausgelegt. Dazu ist ein drehbar gelagertes Arbeitswerkzeug 50 vorgesehen, das von einer Arbeitsposition, in der das Arbeitswerkzeug 50 bei Betrieb einen Arbeitsbereich im Boden 4 bearbeitet, in eine Ruheposition verschwenkbar ist.

Das Bearbeitungsgerät 5 weist ferner eine Detektionsvorrichtung 40 zur Erfassung von Hindernissen 6 in dem Arbeitsbereich auf. Mit der Detektionsvorrichtung 40 wird ein Verschwenken des Arbeitswerkzeuges 50 aus der Arbeitsposition in die Ruheposition bewirkt, wenn die Detektionsvorrichtung 40 ein Hindernis 6 in dem Arbeitsbereich erfasst. Eine Bewegungsvorrichtung 30 bewegt nach dem Passieren des Hindernisses 6 das Arbeitswerkzeuges 50 aus der Ruheposition zurück in die Arbeitsposition. Schließlich weist das Bearbeitungsgerät 5 eine Einstellvorrichtung 20 zur Beeinflussung der Bewegungsvorrichtung 30 auf. Die Einstellvorrichtung verändert bevorzugt die Arbeitsstellung des Bearbeitungsgerätes 5 in sich, also dessen Komponenten zueinander.

Bei dem erläuterten Bearbeitungsgerät 5 ist das Arbeitswerkzeug 50 beispielsweise eine Schar. Die Detektionsvorrichtung 40 ist beispielsweise ein bewegbarer Tasterstab, der in Fahrtrichtung räumlich vor der Schar angeordnet ist. Die Bewegungsvorrichtung 30 umfasst eine Feder 22 und bevorzugt zusätzlich einen Motor 10, der jede Art Stellglied 10 mit gleicher Funktion sein kann. Die Feder 22 ist bevorzugt eine Stahl- oder Luftfeder, kann aber auch durch eine andere Art Energiespeichereinrichtung 22 ersetzt werden.

Ein Aktor 24 zur Einstellung oder Veränderung der Arbeitsstellung der Feder 22 ist dazu eingerichtet, die Vorspannung der Feder im laufenden Betrieb des Bearbeitungsgerätes 5 je nach Bedarf kontinuierlich oder schrittweise zu verändern, wie das im Nachfolgenden noch näher erläutert wird. Der Aktor 24 kann ein Motor wie ein Elektromotor oder ein Kompressor sein oder mit diesen zusammenwirken. Die Bewegungsvorrichtung 30 hat neben dem Stellglied 10 vorzugsweise weitere zugeordnete Mittel wie die in Figur 1 gezeigte Riemen- oder Kettenantriebsvorrichtung bzw. einen Hydraulik- oder Pneumatikzylinder, um darüber das Arbeitswerkzeug 50 von einer Arbeitsposition in eine Ruheposition zu verschwenken. Der Motor 10, die diesem zugeordneten weiteren Mittel, die Bewegungsvorrichtung 30 und die Einstellvorrichtung 20 wirken somit bei Betrieb des Bearbeitungsgerätes 5 zusammen. Bei dem erläuterten Bearbeitungsgerät 5 ist somit ein, bevorzugt kombinierter, Stellantrieb vorgesehen, der die Schar bei Betrieb vor- und zurückbewegt. Die Einstellung oder Veränderung der Arbeitsstellung der Feder 22 mittels der Einstellvorrichtung 20 dient der Bereitstellung einer "intelligenten" bzw. an die jeweilige Arbeitssituation angepasste Vorspannung, wie das nachfolgend noch näher erläutert wird.

Die erfindungsgemäß veränderte Arbeitsstellung der Bewegungsvorrichtung 30 (insbesondere als eine mechanische, spannbare Feder 22 ausgeführt) ist in Übereinstimmung mit dem allgemeinen technischen Verständnis dieses Begriffes ein Punkt auf der Kennlinie der Bewegungsvorrichtung 30, der aufgrund der Systemeigenschaften und der einwirkenden äußeren Einflüsse und Parameter eingenommen wird.

Unter Empfindlichkeit wird in Übereinstimmung mit dem allgemeinen technischen Verständnis die Änderung des Wertes der Ausgangsgröße eines Messgerätes oder einer Detektionsvorrichtung bezogen auf die sie verursachende Änderung des Wertes der jeweiligen Eingangsgröße verstanden. Die Ausgangsgröße ist dabei beispielsweise ein Auslenkungswinkel, eine Auslenkungsamplitude, eine Beschleunigung, eine Kraft oder ein Drehmoment. Die Eingangsgröße ist dabei beispielsweise eine Kraft oder ein Drehmoment.

Bei Betrieb des Bearbeitungsgerätes 5 wird mit dem Tasterstab 40 die Position des zu umfahrenden Elementes, beispielsweise einer Pflanze, als Hindernis 6 detektiert. Statt des Tasterstabes 40 kann auch ein anderes Erfassungsmittel wie eine Kamera mit nachgeordneter Bildverarbeitung verwendet werden. Die Schar 50 wird flach durch den Boden 4 gezogen. Dabei wirkt ein Drehmoment um die Rotationsachse 52 der Schar auf die Schar, welches unter anderem von der Bodenbeschaffenheit und der Fahrgeschwindigkeit abhängig ist. Die Feder 22 wirkt diesem Drehmoment entgegen und hält die Schar 50 in einem Sollzustand Z1 gemäß Figur 4, mit etwas weniger der Feder 22, bevorzugt mittels des Aktors 24, zugeführten Energie, sodass eine in Fahrtrichtung vordere Anschlagsposition gemäß Figur 5 (für feste Anschlagsposition verwendetes Symbol = unterhalb der Schar in die Figur eingetragen) möglichst nicht erreicht wird, also allgemein in einer variablen vorderen Arbeitsposition (Variabilität mit Doppelpfeil in Figur 4 eingetragen).

Als Feder 22 eignet sich beispielsweise eine Stahlfeder oder eine Luftfeder. Wird durch den Tasterstab 40 ein zu umfahrender Gegenstand 6 detektiert, wird gemäß einer bevorzugten Ausführungsform des Verfahrens zusätzlich mittels des Motors 10 die Schar 50 aktiv ausgelenkt und um den zu umfahrenden Gegenstand 6 herumgeführt. Unter anderem auch, um den Motor 10 möglichst energieeffizient betreiben zu können, wird die Feder 22 mittels des Aktors 24 als Einstellvorrichtung 20 intelligent vorgespannt. Im Fall der Verwendung einer Luftfeder kann der Aktor 24 beispielsweise ein Kompressor sein, der den Druck in der Federkammer verändert. Es ist gemäß einer besonders bevorzugten Ausführungsform vorgesehen, das erfindungsgemäße Bearbeitungsgerät 5 ohne den Motor 10, d. h. ohne aktiven Antrieb der Schar 50, zu betreiben. In diesem Fall wird die Schar 50 bei Betrieb dann ausschließlich durch das darauf von außen ausgeübte Drehmoment aus der vorderen Anschlags- oder Arbeitsposition bewegt bzw. verschwenkt.

In dem erläuterten Ausführungsbeispiel der Erfindung ist vorgesehen, dass durch die "intelligente" oder adaptive Vorspannung die Schar 50 in eine Art "schwebenden" Zustand Z1 versetzt wird. Das bewirkt, dass das Bearbeitungsgerät 5 deutlich feinfühliger an den Pflanzen 6 arbeitet als ansonsten möglich.

Um diesen "schwebenden" Zustand Z1 zu generieren, wird bei Betrieb vorzugsweise kontinuierlich ein Vergleich der Auslenkung der Schar 50 und des Tasterstabes 40 durchgeführt. Dies wird mit Hilfe der Figuren 2 und 3 näher erläutert.

In den Figuren 2 und 3 sind über einer Fahrstrecke (in Metern) als x-Achse auf der linken y-Achse der sich verändernde Auslenkwinkel (in Grad) des Tasterstabes 40 (Kurve 300) und der sich verändernde Auslenkwinkel (in Grad) der Schar 50 (Kurve 200) dargestellt. Auf der rechten y-Achse ist die jeweils eingestellte und sich damit verändernde Vorspannung (Kurve 100) der Feder 22 (in Prozent von einem Maximalwert) dargestellt. Weiter sind Zustände Z1, Z2, Z3 und Z4 in den Figuren 2 und 3 eingetragen, die nun erläutert werden.

Im Zustand Z1 schwingt sowohl der Tasterstab wie auch die Schar etwas um einen Nullpunkt oder Referenzpunkt bzw. Mittelwert. Die Amplituden beider Schwingungen unterscheiden sich dabei zwar in der Regel um einen weitgehend konstanten Faktor, verändern sich ansonsten aber zeitlich über der Fahrstrecke weitgehend in gleicher Weise. Dies ist ein vorteilhafter und gewünschter "schwebender" Zustand, der durch eine Anpassung bzw. geeignete Wahl der Vorspannung der Feder eingestellt worden ist.

Im Zustand Z2 schwingt der Tasterstab 40 etwas (analog zu Zustand Z1), die Schar wird aber fest im vorderen Anschlag in einer vorderen Arbeitsposition gehalten und schwingt dort nicht oder fast nicht. Das Verhältnis der Amplituden der Schwingungen von Schar 50 und Tasterstab 40 hat sich gegenüber dem Zustand Z1 drastisch verändert und sogar umgekehrt. Im Zustand Z2 ist die Vorspannung der Feder 22 daher zu hoch eingestellt. Um dies zu korrigieren, wird nun über die Einstellvorrichtung 20 bzw. deren Aktor 24 die Feder 22 schrittweise oder kontinuierlich entspannt, was eine Einstellung oder Veränderung der Arbeitsstellung der Feder 22 bzw. der Bewegungsvorrichtung 30 bewirkt. Dieses Entspannen erfolgt so lange, bis der Sollzustand Z1 wieder erreicht ist.

Im Zustand Z3 wird ein Gegenstand als Hindernis 6 erkannt und umfahren. Dabei folgt die Auslenkung der Schar 50 der Auslenkung des Tasterstabes 40.

In einer ersten Ausführungsform der Erfindung wird im Zustand Z3, d. h. während des Auslenkens bzw. Ausweichens der Schar 50 bzw. des Arbeitswerkzeuges 50 von der Arbeitsposition in die Ruheposition, keine Veränderung oder Regelung der Vorspannung der Feder 22 vorgenommen.

In einer besonders bevorzugten Ausführungsform der Erfindung wird jedoch auch im Zustand Z3, d. h. während des Auslenkens der Schar bzw. des Arbeitswerkzeuges 50 von der Arbeitsposition in die Ruheposition eine Veränderung bzw. Regelung der Vorspannung der Feder 22 vorgenommen. Dies geschieht dadurch, dass die Feder 22 bei der Bewegung der Schar 50 von der Arbeitsposition in die Ruheposition zum Ausweichen ganz entspannt oder die Vorspannung 100 der Feder 22 zumindest verringert wird, und dass die Feder 22 bei der Bewegung der Schar 50 zurück von der Ruheposition in die Arbeitsposition wieder auf den vorher eingestellten Vorspannungswert zurückgespannt wird. Diese Ausführungsform ist zwar etwas aufwändiger in der Einstellung der Federvorspannung 100 als die erste Ausführungsform, führt aber zu einem noch besseren Arbeitsergebnis bzw. einem noch "feinfühligeren" Bearbeitungsgerät 5.

Im Zustand Z4 schwingt der Tasterstab 40 als Detektionsvorrichtung analog zum Zustand Z1 oder Z2. Die Schar 50 schwingt demgegenüber aber wesentlich stärker bzw. fällt auch ohne Hindernis 6, dem auszuweichen wäre, relativ stark zurück. Auch im Zustand Z4 hat sich das Verhältnis der Amplituden der Schwingungen von Schar 50 und Tasterstab 40 gegenüber dem Sollzustand Z1 somit wieder drastisch verändert, diesmal ist die Vorspannung der Feder 22 aber zu niedrig eingestellt. Um dies zu korrigieren, wird nun über die Einstellvorrichtung 20 bzw. deren Aktor 24 die Feder 22 schrittweise oder kontinuierlich stärker gespannt, was wieder eine Einstellung oder Veränderung der Arbeitsstellung der Feder 22 bzw. der Bewegungsvorrichtung 30 bewirkt. Dieses Spannen erfolgt so lange, bis der Sollzustand Z1 wieder erreicht ist.

Erfindungsgemäß ist also eine Anpassung der Vorspannung 100 der Feder 22 mittels des Aktors 24 je nach Bedarf vorgesehen. Ohne eine solche adaptive Regelung der Vorspannung 100 kann die Vorspannung 100 zu hoch (Z2) oder zu niedrig (Z4) sein und damit für die jeweilige, sich in der Regel auch zeitlich ändernde Bearbeitungssituation (Pflanzenart und -stärke, Fahrgeschwindigkeit, Bodenbeschaffenheit, Bodenbewuchs usw.) unangemessen sein.

Vorzugsweise erfolgt die Anpassung der Vorspannung 100 der Feder 22 so, dass die Auslenkempfindlichkeit oder Detektionsempfindlichkeit des Tasterstabes 40 bzw. der Detektionsvorrichtung mit dem Aktor 24 bzw. der Einstellvorrichtung 20 verknüpft oder gekoppelt wird, d. h. die Vorspannung 100 der Feder 22 ist mit der Auslenkempfindlichkeit oder Detektionsempfindlichkeit der Sensorik korreliert. Die Vorspannung wird dadurch immer "optimal" eingestellt: Nicht zu hoch (siehe Zustand Z2 in Figur 2), da die Bewegung der Schar 40 dann zu unempfindlich ist bzw. zu spät kommt, was die Pflanzen 6 beschädigen kann, und nicht zu niedrig (siehe Zustand Z4 in Figuren 2 und 3), da die Bewegung der Schar 50 dann überempfindlich ist bzw. die Schar 50 zu früh oder zu weit aus dem Pflanzenzwischenraum zurückgezogen wird, was dazu führt, dass gewisse Bereiche zwischen den Pflanzen 6 von der Schar 50 nicht bearbeitet werden, was zu nicht optimalen Arbeitsergebnissen führt.

Die jeweils optimale Vorspannung 100 kann, wie in Figur 2 gezeigt, beispielsweise dadurch eingestellt werden, dass die Amplitude der Schwankungen des Signals der Detektionsvorrichtung 40 um einen Nullpunkt oder Mittelwert herum kontinuierlich gemessen wird und mit der Amplitude der Schwankungen der Auslenkung 200 des Arbeitswerkzeuges 50 um einen Nullpunkt oder Mittelwert verglichen wird. Solange beides innerhalb eines vordefinierten Faktors oder Intervalls oder einer vorgegebenen Toleranz liegt, ist der gewünschte "schwebende" Sollzustand (Zustand Z1) gegeben. Wenn die Schwankungen der Auslenkung des Arbeitswerkzeuges 50 um einen Nullpunkt oder Mittelwert deutlich größer sind als im "schwebenden" Zustand (Zustand Z4), ist die Federspannung zu gering und wir gemäß der bereits beschriebenen bevorzugten Ausführungsform mittels des Aktors 24 nachgestellt bzw. erhöht werden. Wenn die Schwankungen der Auslenkung des Arbeitswerkzeuges 50 um einen Nullpunkt bzw. Mittelwert deutlich kleiner sind als im "schwebenden" Zustand (Zustand Z2), ist die Federspannung zu hoch und muss über den Aktor 24 nachgestellt/verringert werden.

Wie bereits erwähnt, muss die Detektionsvorrichtung 40 nicht zwingend ein Tasterstab 40 sein bzw. auf einem mechanischen Messprinzip beruhen. Es eignet sich auch irgendeine andere Pflanzen- bzw. Hindernisdetektionssensorik wie eine Kamera mit zugeordneter Bildverarbeitung (optisches Messprinzip).

Auch die Bewegungsvorrichtung 30 ist nicht auf die Verwendung der Feder 22 beschränkt, sondern es können auch andere Mittel wie beispielsweise ein Gummiband zur Bereitstellung einer veränderbaren Rückstellkraft oder eines veränderbaren Rückstelldrehmomentes auf das Arbeitswerkzeuges 50 verwendet werden.

### Bezugszeichenliste

- 4: Boden
- 5: Bearbeitungsgerät
- 6: Hindernis

- 10: Stellglied, insbesondere Motor
- 20: Einstellvorrichtung
- 22: Energiespeichereinrichtung, insbesondere Feder
- 24: Aktor
- 30: Bewegungsvorrichtung
- 40: Detektionsvorrichtung, insbesondere Taststab
- 50: Arbeitswerkzeug
- 52: Achse

### Zustände

- Z1: Sollzustand
- Z2: Anschlag erreicht
- Z3: Ausweichen wegen eines Hindernisses 6
- Z4: zu schwach gespannte Feder 22

- 100: Vorspannung der Energiespeichereinrichtung, insb. Feder 22
- 200: Auslenkung der Schar 50 in °
- 300: Auslenkung des als Taster 40 vorgesehenen Metallstabes zur Sensorposition
- 400: dem Arbeitswerkzeug 50 zugeführte Energie

## Patentansprüche

1. Bearbeitungsgerät (5), insbesondere zur Bodenbearbeitung zwischen Pflanzen von Reihenkulturen wie Wein-, Obst- oder Hopfenkulturen oder Hecken, umfassend:
- ein bewegbares Arbeitswerkzeug (50), das von einer Arbeitsposition, in der das Arbeitswerkzeug (50) einen Arbeitsbereich des Bodens (4) zu bearbeiten bestimmt ist, in eine Ruheposition bewegbar ist,
- eine Detektionsvorrichtung (40) zur Erfassung eines Hindernisses (6) in dem Arbeitsbereich, das ein Bewegen des Arbeitswerkzeuges (50) aus der Arbeitsposition in die Ruheposition erfordert, um so ein Ausweichen des Arbeitswerkzeug (50) gegenüber dem Hindernis (6) in dem Arbeitsbereich zu bewirken, und
- eine Bewegungsvorrichtung (30) zur Bewegung des Arbeitswerkzeuges (50) aus der Ruheposition in die Arbeitsposition,
**dadurch gekennzeichnet, dass**
- eine Einstellvorrichtung (20) mit einer justierenden Energiespeichereinrichtung (22) zur Veränderung der Arbeitsstellung der Bewegungsvorrichtung (30) vorgesehen ist.

2. Bearbeitungsgerät (5) nach Anspruch 1,
**dadurch gekennzeichnet, dass** die Energiespeichereinrichtung (22), insbesondere mittels eines Aktors (24), selbstjustierend konzipiert ist.

3. Bearbeitungsgerät nach Anspruch 1 oder 2, wobei die Einstellvorrichtung (20) in der Arbeitsstellung ein Drehmoment auf das Arbeitswerkzeug (50) ausübt und einem bei Betrieb auf das Arbeitswerkzeug (50) einwirkenden Drehmoment entgegenwirkt, um das Arbeitswerkzeug (50) in einer vorderen Anschlagsposition oder in der Nähe der vorderen
Anschlagsposition zu halten, und wobei mittels der Einstellvorrichtung (20) eine Vorspannung der Bewegungsvorrichtung (30), insbesondere der Energiespeichereinrichtung (22), einstellbar ist.

4. Bearbeitungsgerät nach mindestens einem der vorangehenden Ansprüche, wobei ein Mittel vorgesehen ist, mit dem ein Vergleich einer Auslenkung des Arbeitswerkzeuges (50) in der Arbeitsposition und einer Auslenkung der Detektionsvorrichtung (40) vorgenommen werden kann, und wobei mit der Einstellvorrichtung (20) die Arbeitsstellung der Bewegungsvorrichtung (30) in Abhängigkeit von dem Ergebnis dieses Vergleichs veränderbar ist.

5. Bearbeitungsgerät nach mindestens einem der vorangehenden Ansprüche, wobei mit der Einstellvorrichtung (20) eine Veränderung der Arbeitsstellung der Bewegungsvorrichtung (30), insbesondere eine mittels der Energiespeichereinrichtung (22) bewirkte Vorspannung , in Abhängigkeit von einem Ergebnis eines Vergleiches einer Auslenkung des Arbeitswerkzeuges (50) bei Betrieb in der Arbeitsstellung und einer Auslenkung der Detektionsvorrichtung (40) bei Betrieb steuer- oder regelbar ist, und gemäß einer besonders bevorzugten Ausführungsform zusätzlich mittels eines Stellgliedes (10) das durch die Bewegungsvorrichtung (30) durchzuführende Bewegen, insbesondere das Rückstellen, des Arbeitswerkzeuges (50) unterstützt ist.

6. Bearbeitungsgerät nach mindestens einem der vorangehenden Ansprüche, wobei ein Mittel vorgesehen ist, mit dem ein Vergleich einer Auslenkempfindlichkeit des Arbeitswerkzeuges (50) in der Arbeitsposition und einer Detektionsempfindlichkeit der Detektionsvorrichtung (40) bei Betrieb vorgenommen werden kann, und wobei weiter mit der Einstellvorrichtung (20) die Arbeitsstellung der Bewegungsvorrichtung (30) in Abhängigkeit von dem Ergebnis dieses Vergleichs verändert werden kann.

7. Bearbeitungsgerät nach mindestens einem der vorangehenden Ansprüche, wobei die Einstellvorrichtung (20) die Arbeitsstellung der Bewegungsvorrichtung (30), insbesondere die Energiespeichereinrichtung (22), besonders bevorzugt die Vorspannung der Feder, bei Betrieb in Abhängigkeit von der Auslenkempfindlichkeit des Arbeitswerkzeuges (50) und der Detektionsempfindlichkeit der Detektionsvorrichtung (40) steuert oder regelt.

8. Bearbeitungsgerät nach mindestens einem der vorangehenden Ansprüche, wobei die Einstellvorrichtung (20) die Arbeitsstellung der Bewegungsvorrichtung (30), insbesondere die von der Energiespeichereinrichtung (22) bewirkbare Kraft, besonders bevorzugt die Vorspannung der Feder, in Abhängigkeit von der Amplitude einer bei Betrieb auf das Arbeitswerkzeug (50) einwirkenden, zeitlich veränderlichen Kraft oder von der Amplitude eines bei Betrieb auf das Arbeitswerkzeug (50) einwirkenden, zeitlich veränderlichen Drehmoments und weiter in Abhängigkeit von der Amplitude eines bei Betrieb auftretenden, zeitlich veränderlichen Signals der Detektionsvorrichtung (40) verändert, insbesondere regelt.

9. Traktor oder Zugmaschine mit einem daran insbesondere seitlich befestigten Bearbeitungsgerät (5) nach mindestens einem der vorangehenden Ansprüche.

10. Verfahren zum Betreiben eines Bearbeitungsgerätes (5), umfassend die Schritte:
- ein Bereitstellen eines bewegbaren, insbesondere drehbar gelagerten Arbeitswerkzeuges (50), das von einer Arbeitsposition, in der das Arbeitswerkzeug (50) einen Arbeitsbereich im Boden (4) bearbeiten kann, in eine Ruheposition bewegbar ist,
- ein Bereitstellen einer Detektionsvorrichtung (40) zur Erfassung eines Hindernisses (6) in dem Arbeitsbereich, das ein Bewegen oder Verschwenken des Arbeitswerkzeuges (50) aus der Arbeitsposition in die Ruheposition erfordert, um ein Ausweichen des Arbeitswerkzeuges (50) gegenüber dem Hindernis in dem Arbeitsbereich zu bewirken, und
- ein Bereitstellen einer Bewegungsvorrichtung (30) zur Bewegung des Arbeitswerkzeuges (50) aus der Ruheposition in die Arbeitsposition,
**dadurch gekennzeichnet, dass** bei Betrieb des Bearbeitungsgerätes (5) mittels einer Einstellvorrichtung (20) mit einer justierenden Energiespeichervorrichtung (22) eine Einstellung oder Veränderung der Arbeitsstellung der Bewegungsvorrichtung (30) vorgenommen wird.

11. Verfahren nach Anspruch 10,
**dadurch gekennzeichnet, dass** die Bewegungsvorrichtung (30) in Abhängigkeit einer Lastschwankungsamplitude beeinflusst wird, insbesondere mittels eines eine Energiespeichereinrichtung (22) beeinflussenden Aktors (24) .

12. Verfahren nach einem der Ansprüche 10 oder 11,
**dadurch gekennzeichnet, dass** mittels eines Stellgliedes (10), insbesondere mittels eines Motors, das durch die Bewegungsvorrichtung (30) durchzuführende Bewegen, insbesondere das Rückstellen, des Arbeitswerkzeuges (50) unterstützt wird.

## Claims

1. Cultivating implement (5), in particular for tillage between plants of row crops such as vine, fruit or hop crops or hedges, comprising:
- a movable work tool (50) which can be moved from a working position in which the work tool (50) is intended to work a working area of the floor (4) to a resting position,
- a detection device (40) for detecting an obstacle (6) in the work area which requires moving the work tool (50) from the working position to the resting position in order to cause the work tool (50) to move towards the obstacle (6) in the work area, and
- a movement device (30) for moving the working tool (50) from the resting position to the working position,
**characterized by** the fact that
- an adjustment device (20) with an adjusting energy storage device (22) is provided for changing the working position of the motion device (30).

2. Cultivating implement (5) according to claim 1, **characterized by** the fact that the energy storage device (22), in particular by means of an actuator (24), is designed to be self-adjusting.

3. The cultivating implement according to claim 1 or 2, wherein the adjustment device (20) exerts a torque on the working tool (50) in the working position and counteracts a torque acting on the working tool (50) during operation in order to keep the working tool (50) in a front stop position or near the front stop position, and, wherein by means of the adjustment device (20), a preload of the moving device (30), in particular of the energy storage device (22), can be adjusted.

4. A cultivating implement according to at least one of the preceding claims, wherein a means is provided by which a comparison can be made between a deflection of the working tool (50) in the working position and a deflection of the detection device (40), and wherein the working position of the movement device (30) can be changed with the adjustment device (20) depending on the result of this comparison.

5. A cultivating implement according to at least one of the preceding claims, wherein a change in the working position of the moving device (30), in particular a preload caused by means of the energy storage device (22), can be controlled or closed-loop controlled by means of the adjustment device (20), depending on a result of a comparison of a deflection of the working tool (50) when operating in the working position and a deflection of the detection device (40) during operation, and wherein, in accordance with a particularly preferred embodiment, the movement to be carried out by the movement device (30), in particular the resetting, of the working tool (50) is additionally supported by means of an actuator (10).

6. A cultivating implement according to at least one of the preceding claims, wherein a means is provided by which a comparison can be made of a deflection sensitivity of the working tool (50) in the working position and a detection sensitivity of the detection device (40) during operation, and wherein further the working position of the movement device (30) can be changed by means of the adjustment device (20) depending on the result of this comparison.

7. A cultivating implement according to at least one of the preceding claims, wherein the adjustment device (20) controls or closed-loop controls the working position of the movement device (30), in particular the energy storage device (22), in particular the preload of the spring, during operation depending on the deflection sensitivity of the working tool (50) and the detection sensitivity of the detection device (40).

8. A cultivating implement according to at least one of the preceding claims, wherein the adjustment device (20) controls the working position of the movement device (30), in particular the force effectible by the energy storage device (22),more preferably the preload of the spring, depending on the amplitude of a time-varying force acting on the working tool (50) during operation or depending on the amplitude of a time-varying torque acting on the working tool (50) during operation, and further depending on the amplitude of a time-varying signal of the detection device (40) occurring during operation.

9. A tractor or towing vehicle comprising a cultivating implement (5) attached thereto, in particular laterally, according to at least one of the preceding claims.

10. Method for operating a cultivating implement (5), comprising the steps:
- providing a movable, in particular rotatable working tool (50) which can be moved from a working position in which the working tool (50) can work a working area in the floor (4) to a resting position,
- providing a detection device (40) for detecting an obstacle (6) in the work area which requires moving or swiveling the work tool (50) from the working position to the resting position in order to cause the work tool (50) to avoid the obstacle in the work area, and
- providing a movement device (30) for moving the work tool (50) from the resting position to the working position,
**characterized in that**, during operation of the processing device (5), an adjustment or change of the working position of the movement device (30) is made by means of an adjustment device (20) with an adjusting energy storage device (22).

11. The method of claim 10, **characterized in that** the movement device (30) is influenced as a function of a load fluctuation amplitude, in particular by means of an actuator influencing an energy storage device (22) (24).

12. The method according to any one of claims 10 or 11, **characterized in that**, by means of an actuator (10), in particular by means of a motor, the movement to be carried out of the working tool (50), in particular the resetting, is supported by the movement device (30).

## Revendications

1. Appareil de traitement (5), en particulier pour le travail du sol entre plantes de cultures en rangs tels que cultures de vignes, fruits ou houblons ou haies, comprenant :
- un outil de travail mobile (50) qui peut être déplacé d'une position de travail où l'outil de travail (50) est destiné à travailler une zone de travail du sol (4) vers une position de repos,
- un dispositif de détection (40) pour détecter un obstacle (6) dans la zone de travail qui nécessite de déplacer l'outil de travail (50) de la position de travail à la position de repos pour provoquer que l'outil (50) évite l'obstacle (6) dans la zone de travail, et
- un dispositif de mouvement (30) pour déplacer l'outil de travail (50) de la position de repos à la position de travail,
**caractérisée par le fait que**
- un dispositif de réglage (20) avec un dispositif de stockage d'énergie (22) est prévu pour modifier la position de travail du dispositif de mouvement (30).

2. Appareil de traitement (5) selon la revendication 1, **caractérisée par le fait que** le dispositif de stockage d'énergie (22), notamment au moyen d'un actionneur (24), est conçu pour être auto-ajustable.

3. Appareil de traitement selon la revendication 1 ou 2, où le dispositif de réglage (20) exerce un couple sur l'outil de travail (50) en position de travail et contrebalance un couple agissant sur l'outil de travail (50) pendant le fonctionnement afin de maintenir l'outil de travail (50) en position d'arrêt avant ou près de la position d'arrêt avant, et où, au moyen du dispositif de réglage (20), une précharge du dispositif mobile (30), en particulier du dispositif de stockage d'énergie (22), est réglable.

4. Appareil de traitement selon au moins une des revendications précédentes, dans lequel un moyen est fourni pour comparer une déviation de l'outil de travail (50) en position de travail et une déviation du dispositif de détection (40), et où la position de travail du dispositif de mouvement (30) peut être modifiée avec le dispositif de réglage (20) selon le résultat de cette comparaison.

5. Appareil de traitement selon au moins une des revendications précédentes, dans lequel un changement de position de travail du dispositif mobile (30) peut être contrôlé ou régulé au moyen du dispositif de réglage (20), en particulier une précharge causée par le dispositif de stockage d'énergie (22), selon le résultat d'une comparaison entre une déviation de l'outil de travail (50) lors de l'exploitation en position de travail et une déviation du dispositif de détection (40) pendant le travail, et, conformément à un mode de réalisation particulièrement préféré, en plus le mouvement, en particulier le repositionnement, à effectuer par le dispositif de mouvement (30) de l'outil de travail (50), est soutenu par un actionneur (10).

6. Appareil de traitement selon au moins une des revendications précédentes, où un moyen est fourni pour comparer la sensibilité à la déviation de l'outil de travail (50) en position de travail et la sensibilité de détection du dispositif de détection (40) pendant le travail, et où la position de travail du dispositif de mouvement (30) peut être modifiée par le dispositif de réglage (20) selon le résultat de cette comparaison.

7. Appareil de traitement selon au moins une des revendications précédentes, dans lequel le dispositif de réglage (20) contrôle ou régule la position de travail du dispositif de mouvement (30), en particulier le dispositif de stockage d'énergie (22), en particulier la précharge du ressort, pendant le fonctionnement selon la sensibilité à la déviation de l'outil de travail (50) et la sensibilité de détection du dispositif de détection (40).

8. Appareil de traitement selon au moins une des revendications précédentes, où le dispositif de réglage (20) change, en particulier règle, la position de travail du dispositif de mouvement (30), en particulier la force provoquée par le dispositif de stockage d'énergie (22), en particulier la précharge du ressort, dépendant de l'amplitude d'une force variable dans le temps agissant sur l'outil de travail (50) pendant le fonctionnement ou de l'amplitude d'un couple variable dans le temps agissant sur l'outil de travail (50) pendant le fonctionnement et en outre dépendant de l'amplitude d'un signal variable dans le temps du dispositif de détection (40).

9. Tracteur ou véhicule tracteur avec un appareil de traitement (5) selon au moins une des revendications précédentes attaché à celui-ci, en particulier latéralement.

10. Procédé pour utiliser un appareil de traitement (5), comprenant les étapes suivantes :
- fournir un outil de travail mobile, en particulier rotatif (50), qui peut être déplacé d'une position de travail dans laquelle l'outil de travail (50) peut travailler sur une zone de travail au sol (4) vers une position de repos,
- fournir un dispositif de détection (40) pour détecter un obstacle (6) dans la zone de travail qui nécessite de déplacer ou de faire pivoter l'outil (50) de la position de travail à la position de repos afin que l'outil (50) évite l'obstacle dans la zone de travail, et
- fournir un dispositif de mouvement (30) pour déplacer l'outil de travail (50) de la position de repos à la position de travail,
**caractérisé par le fait que**, lors du fonctionnement de l'appareil de traitement (5), au moyen d'un dispositif de réglage (20) avec un dispositif de stockage d'énergie ajustant, un ajustement ou un changement de la position de travail du dispositif de mouvement (30) est effectué.

11. Procédé selon la revendication 10, **caractérisé par le fait que** le dispositif de mouvement (30) est influencé en fonction d'une amplitude de fluctuation de charge, notamment par un actionneur (24) influençant un dispositif de stockage d'énergie (22).

12. Procédé selon une des revendications 10 ou 11, **caractérisé par le fait que**, par un actionneur (10), notamment par un moteur, le mouvement à effectuer par le dispositif de mouvement (30), en particulier le repositionnement de l'outil de travail (50), est supporté.
